# EUROPÄISCHE PATENTSCHRIFT

(11) **EP 4 647 731 B1**
(45) Veröffentlichungstag und Bekanntmachung des Hinweises auf die Patenterteilung: **25.02.2026**
(21) Anmeldenummer: 24174630.4
(22) Anmeldetag: 07.05.2024
(51) Int. Cl.: G01F 23/24, E03F 7/00

(54) **SENSOREINRICHTUNG SOWIE VERFAHREN ZUR BESTIMMUNG DES FÜLLSTANDS EINER ENTWÄSSERUNGSVORRICHTUNG**
SENSOR DEVICE AND METHOD FOR DETERMINING THE FILL LEVEL OF A DRAINAGE DEVICE
DISPOSITIF DE DÉTECTION ET PROCÉDÉ POUR DÉTERMINER LE NIVEAU DE REMPLISSAGE D'UN DISPOSITIF DE DRAINAGE

(43) Veröffentlichungstag der Anmeldung: 12.11.2025
(73) Patentinhaber: RX-WATERTEC GmbH, 76131 Karlsruhe (DE)
(72) Erfinder: Brand, Daniel, 29223 Celle (DE)
(74) Vertreter: Christ, Niko

(56) Entgegenhaltungen:
- EP-B1- 1 344 028
- WO-A1-2008/018425
- JP-A- H0 566 146
- JP-A- H04 310 823
- US-A- 5 148 708

## Beschreibung

Die vorliegende Erfindung betrifft eine Sensoreinrichtung umfassend ein Leiterband mit wenigstens zwei in einer Längsrichtung verlaufenden und elektrisch voneinander isolierten Leitersträngen, welche jeweils in Längsrichtung des Leiterbandes eine Vielzahl beabstandeter Kontaktelemente aufweisen, wobei jeweils ein Kontaktelement eines ersten Leiterstrangs mit einem Kontaktelement eines zweiten Leiterstrangs ein Kontaktpaar bilden und zwischen benachbarten Kontaktpaaren jeweils ein Widerstand in zumindest einem der Leiterstränge angeordnet ist, sowie ein Verfahren zur Auswertung einer solchen Sensoreinrichtung.

Eine solche Sensoreinrichtung ist bereits aus der JP S 5624590 A vorbekannt. Dort wird eine Widerstandsdekade beschrieben, die in einen Flüssigkeitsbehälter wie etwa eine Grundwasserzisterne eingetaucht wird, um deren Füllstand zu überwachen. Es ist vorgesehen, dass elektrische Widerstände in gleichmäßigen Abständen angeordnet werden, zwischen denen Kontaktelemente eingesetzt werden. Werden zwei benachbarte Kontaktelemente mit dem in der Zisterne ansteigenden Wasser umspült, so ergibt sich ein Kurzschluss zwischen den benachbarten Kontaktelementen. Weiter oben liegende und daher nicht umspülte Kontaktelemente bleiben ohne Kurzschluss. Eine Verbindung zwischen einer Widerstandsreihenschaltung und einer Masseleitung wird also von einem oben liegenden Versorgungsanschluss betrachtet erst auf Höhe der Wasseroberfläche, sowie darunter, hergestellt. Wird der Widerstandswert ermittelt, kann bei gegebenem Wert der jeweiligen Widerstände dann berechnet werden, welche Kontaktelemente bereits umspült werden und bei welchen noch kein Kontakt hergestellt wurde. Gemessen werden aufgrund des Kurzschlusses nur die noch nicht umspülten Widerstände. Entsprechend kann mit dem Wissen, auf welcher Höhe welcher Widerstandswert liegt, bestimmt werden, wie hoch das Wasser ansteht.

In einer weiteren Lösung setzt die EP 0 130 291 B1 eine ähnliche Sensoreinrichtung um, bei welcher jedoch nicht mit einer Widerstandskaskade gearbeitet wird, sondern mit Leiterfolie, die ihrerseits entweder eine fremdbeheizte Widerstandsfolie oder ein Paar von beabstandet gelagerten Kapazitätsfolien sein können. Ergänzend ist vorgesehen, die Widerstandsfolie in eine Umhüllung einzupacken, welche mit der Widerstandsfolie zusammen in eine Ausbuchtung eines mit der Vorrichtung zu versehenden Tanks eingelassen wird, um zu vermeiden, dass Fehlmessungen aufgrund von Verformungen des Tanks entstehen.

EP1344028-B1 offenbart ein Pipettensystem mit einem Sensorelement zur Positionsmessung einer Phasengrenze, wobei das Sensorelement ein elektrischer Sensor ist, der aus einem Substrat und mehreren einzeln an elektrischen Anschlussmöglichkeiten kontaktierbaren, auf das Substrat aufgebrachten Elektroden besteht, wobei die Elektroden aus mit elektrischen Verbindungen vernetzten sensoraktiven Teilelektroden bestehen und sich die Teilelektroden von jeweils zwei Elektroden immer als Teilelektrodenpaare beabstandet gegenüberliegen und die so gebildeten Elektrodenpaare sich periodisch über die Sensorlänge wiederholen.

Prinzipiell wird bei diesen Lösungen jeweils damit gearbeitet, dass die mit den Leitern in Kontakt tretende Flüssigkeit einen Kurzschluss verursacht und damit ein Füllstand ermittelt werden kann. Eine solche Lösung erscheint auch im Bereich der Entwässerungsvorrichtungen von Interesse zu sein, jedoch besteht die Problematik, dass bei Entwässerungsvorrichtungen zum Einen das Wetter eine große Rolle spielt und zum Anderen Verunreinigungen auftreten können. Wird etwa in eine Zisterne beständig Laub eingetragen, so kann auch das Laub als Fehlerfall einen Kurzschluss an falscher Stelle verursachen. Ist das Wasser stark etwa mit Erdreich verunreinigt, so kann sich bei einer zügigen Austrocknung, etwa nach einem stark eintragenden Niederschlagsereignis, ein Schmutzfilm auf dem Sensor bilden, der die Messergebnisse verfälscht.

Vor diesem Hintergrund liegt der vorliegenden Erfindung die Aufgabe zu Grunde, eine Sensoreinrichtung, wie auch ein Verfahren zur Auswertung einer solchen Sensoreinrichtung zu schaffen, bei welcher eine Messung neben der reinen Füllstandsmessung auch mit zusätzlichen Mitteln zuverlässig verifiziert werden kann.

Gelöst wird diese Aufgabe durch eine Sensoreinrichtung gemäß den Merkmalen des Anspruchs 1 sowie durch ein Verfahren gemäß den Merkmalen des nebengeordneten Anspruchs 17. Sinnvolle Ausgestaltungen einer solchen Sensoreinrichtung sowie eines solchen Verfahrens zu deren Auswertung können den sich jeweils anschließenden abhängigen Ansprüchen entnommen werden.

Vorgesehen ist insoweit eine Sensoreinrichtung umfassend ein Leiterband mit wenigstens zwei in einer Längsrichtung verlaufenden und elektrisch voneinander isolierten Leitersträngen, welche jeweils in Längsrichtung des Leiterbandes eine Vielzahl beabstandeter Kontaktelemente aufweisen, wobei jeweils ein Kontaktelement eines ersten Leiterstrangs mit einem Kontaktelement eines zweiten Leiterstrangs ein Kontaktpaar bilden und zwischen benachbarten Kontaktpaaren jeweils ein Widerstand in zumindest einem der Leiterstränge angeordnet ist. Eine solche Sensoreinrichtung ist erfindungsgemäß dadurch gekennzeichnet, dass dem Leiterband wenigstens zwei Temperatursensoren zugeordnet sind, wobei ein erster Temperatursensor im Bereich eines Kopfendes des Leiterbandes und ein zweiter Temperatursensor im Bereich eines Tiefpunkts des Leiterbandes angeordnet sind und die Leiterstränge und die Temperatursensoren mit einem Mikrocontroller zur Auswertung elektrischer Eigenschaften der Leiterstränge und der Temperatursensoren elektrisch verbunden sind.

Die Sensoreinrichtung besteht insoweit im Wesentlichen aus dem Grundmaterial des Leiterbandes, welches in einer einfachen Ausgestaltung zunächst eine herkömmliche Leiterplatte sein kann, auf dem zunächst zwei Leiterbahnen angeordnet sind. Diesen Leiterbahnen zugeordnet sind jeweils in regelmäßigen oder unregelmäßigen Abständen Kontaktflächen, wobei die Kontaktflächen paarweise durch das ansteigende Wasser miteinander elektrisch verbunden werden können.

Um allerdings zusätzlich zu dieser reinen Information zur Höhenlage belastbare Informationen zu erhalten, sind wenigstens zwei Temperatursensoren vorgesehen, welche ergänzend jeweils eine Temperatur ermitteln lassen und damit weitere Rückschlüsse erlauben. Ergibt sich etwa mit der Zeit in der Sohle einer Entwässerungsvorrichtung eine Sedimentationsschicht, so werden der untere Temperatursensor im Bereich des Tiefpunkts der Sensoreinrichtung und der obere Temperatursensor im Bereich der Oberkante, gegebenenfalls im Bereich einer Zarge, unterschiedliche Temperaturen liefern. Insbesondere wenn der untere Temperatursensor von der Sedimentschicht ganz verdeckt oder gar verstopft ist, wird er aufgrund seiner geschützten Position oder aufgrund von Reaktionen in der Sedimentschicht eine höhere Temperatur anzeigen und damit von dem oberen Temperatursensor abweichen. Dies lässt dann auch Rückschlüsse darauf zu, wie weitere Messungen interpretiert werden müssen. Zudem kann auf eine solche Erkenntnis auch reagiert werden, indem ein Reinigungsvorgang initiiert wird, indem etwa Stauklappen für eine Rinnenspülung geöffnet werden oder im Grenzfall ein Reinigungsteam zur mechanischen Reinigung ausgesandt wird.

In konkreter Ausgestaltung können die wenigstens zwei Temperatursensoren als thermische Widerstände oder als Thermoelemente ausgeführt sein. In einem solchen Fall ist es ausreichend, wenn der Mikrocontroller lediglich in der Lage ist, an seinen Eingängen Widerstände zu messen. Die Art der anliegenden Signale ist für den Wasserstand und die Temperatur gleich, was die Datenverarbeitung vereinfacht.

Die Erfindung sieht zunächst als Basis ein Leiterband vor, das entweder als Leiterplatte nach Bedarf geformt aber starr, oder an den Bedarf anpassbar und flexibel ist. Ein flexibles Leiterband wird üblicherweise aus Polyethylenterephthalat (PET) oder Polyimid hergestellt, was es neben der gewünschten Flexibilität auch leicht verarbeitbar und haltbar macht. Bekannt sind solche Leiterbänder vor allem von Lichtstreifen, auf denen Leuchtdioden angebracht werden und die durch ein einfaches Abschneiden auf eine gewünschte Länge gekürzt und auf Oberflächen festgeklebt werden können. Die Nutzung eines solchen flexiblen Leiterbandes erlaubt eine weitgehende Anpassung der Sensoreinrichtung an verschiedene Anwendungsmöglichkeiten.

Bevorzugtermaßen wiederholen sich die Paare von Kontaktflächen alle 8 mm, jedoch sind auch andere Abstände möglich. Insbesondere bei einer Verlegung des Leiterbandes in Rundungen kann es sinnvoll sein, wenn die Abstände in Richtung des Kopfendes kleiner werden, da bei einer entlang einer Seitenwand senkrecht verlegten bandförmigen Sensoreinrichtung die Füllstände langsamer steigen als im Bereich einer Rinnensohle, wo bereits aufgrund eines wenig größeren Füllstands die Kontaktelemente entlang des Leiterbandes schnell nacheinander erreicht werden. Wird hingegen der gleiche Abstand auch im Bereich der Rinnensohle vorgesehen, erlaubt dies aufgrund einer höheren Auflösung eine bessere Messgenauigkeit in diesem Bereich.

Insbesondere kann vorgesehen sein, dass die Kontaktelemente eines Kontaktpaares in Längsrichtung des Leiterbandes in gleichem Abstand zum Kopfende und damit bei einem senkrechten Verlauf des Leiterbandes auf gleicher geodätischer Höhe angeordnet sind. Während es prinzipiell auch möglich ist, die Kontaktelemente beider Leiterstränge höhenversetzt anzuordnen, stellt doch eine Anordnung der Kontaktpaare in gleicher Höhe die bevorzugte Ausgestaltung dar. Hierdurch ergibt sich neben der definierten Höhenlage auch ein möglichst kurzer Abstand zwischen den Kontaktelementen eines Kontaktpaars und damit ein minimaler Widerstand des den Kurzschluss bewirkenden Wassers.

Eine konkrete Lösung sieht vor, dass der erste Leiterstrang die zwischen den Kontaktpaaren angeordneten Widerstände in einer Reihenschaltung aufweist und der zweite Leiterstrang ein durchgehender Massestrang ist. Während es auch hier prinzipiell möglich ist, die Widerstände auf die Leiterstränge zu verteilen, stellt deren Anordnung in einem ersten Leiterstrang eine bevorzugte und baulich möglichst einfache Lösung dar. Der zweite Leiterstrang ist in diesem Fall eine einfache potenzialfreie Rückleitung.

Bevorzugtermaßen kann vorgesehen sein, dass das Leiterband in einer starren oder einer flexiblen Gussmasse vergossen oder mit einer wasserfesten Schutzlackierung versehen ist. Das Vergießen von Leiterelementen ist bereits seit Langem bekannt, um äußere Einflüsse von elektrischen Schaltungen fernzuhalten. Dies betrifft sowohl mechanische Schwingungen und Einwirkungen, als auch die Einwirkung von Feuchtigkeit oder im vorliegenden Fall von in anstehendem Wasser gelösten Stoffen. Die Kontaktelemente weisen hierbei Kontaktflächen auf, die von der Vergussmasse freigehalten werden. Durch die Verwendung einer flexiblen Gussmasse, wie etwa Silikon, kann zudem aufgrund von thermischer Ausdehnung eine gewisse Spannung auf sich anlagernde Schmutzschichten wirken, um diese leichter wieder abtragen zu können.

Alternativ kann jedoch auch vorgesehen sein, dass die Widerstände des Leiterbandes flüssigkeitsdicht gekapselt sind. Dies stellt einen konkreteren Schutz nur für die Widerstände dar und erhält damit gerade bei einem flexiblen Leiterband eine größere Flexibilität.

Während auf dem Leiterband die elektrischen Verbindungen vorzugsweise durch Kupferfolie hergestellt sind, müssen die Kontakte letztlich von dem Leiterband zu dem Mikrocontroller über Kabel weitergeleitet werden. Die Kontaktelemente hingegen, soweit diese mit dem Oberflächenwasser in Kontakt treten, können mit besonderem Vorteil eine veredelte Oberfläche aufweisen, insbesondere aus Gold, so dass eine Korrosion aufgrund des Wasserkontakts vermieden wird. Ob das Leiterband dabei flexibel ist oder nicht, erscheint es sinnvoll, wenn dem Leiterband ein flüssigkeitsdichter Kabelansatz zugeordnet ist. Hierdurch ist ein Eindringen von Flüssigkeit in den Kabelansatz verhindert und dieser ist zusätzlich mechanisch mit dem Leiterband selbst verbunden.

Eine weitere sinnvolle Ausgestaltung kann vorsehen, dass dem Leiterband eine Umhüllung zugeordnet ist, welche wenigstens eine Eintrittsöffnung im Bereich des Tiefpunkts des Leiterbandes und wenigstens eine Belüftungsöffnung im Bereich des Kopfendes des Leiterbandes aufweist. Das Kopfende des Leiterbandes soll jeweils im Bereich einer Oberkante einer Entwässerungsvorrichtung angeordnet sein. Von dort aus erstreckt sich das Leiterband möglichst gerade nach unten. Wie weit es sich nach unten erstreckt, hängt von der jeweiligen Anwendung ab. Damit die Flüssigkeit in die Umhüllung eintreten und damit überhaupt erst mit den Kontaktelementen in Kontakt treten kann, muss eine Eintrittsöffnung in der Umhüllung vorgesehen sein. Diese befindet sich nicht an einer bezüglich des Leiterbands definierten Position, sondern an einem Tiefpunkt des Leiterbandes. Ist das Leiterband ausschließlich senkrecht, etwa nur an einer Wand einer Zisterne oder eines Schachts angeordnet, so befindet sich der Tiefpunkt an seinem dem Kopfende gegenüberliegenden Ende. Durchquert das Leiterband hingegen eine Entwässerungsrinne mit bogenförmigem Querschnitt, so liegt das gegenüberliegende Ende möglicherweise in derselben Höhe wie das Kopfende, dann ist die Eintrittsöffnung in dem tatsächlich tiefsten Punkt anzuordnen. Eine solche Umhüllung kann mit weiterem Vorteil aus einem flexiblen Material, vorzugsweise aus Silikon oder einem Kunststoff, insbesondere einem thermoplastischen Kunststoff, hergestellt sein.

Eine besonders sinnvolle Einsatzmöglichkeit für die vorstehend beschriebene Sensoreinrichtung besteht darin, dass das Leiterband mit einer unterirdischen Entwässerungsvorrichtung, etwa einer Rinne, einer Zisterne, einer Rigole oder einem Schacht, welche vorzugsweise mit einer Abdeckung verschlossen ist, verbunden ist und sich zumindest näherungsweise senkrecht von dem Kopfende im Bereich einer Oberkante ausgehend in Richtung einer Rinnensohle erstreckt. In dieser bereits mehrfach angesprochenen Lösung kann das in der Entwässerungsvorrichtung anstehende Wasser die Kontaktelemente miteinander verbinden und der in der Entwässerungsvorrichtung vorhandene Wasserstand, ebenso wie die Temperaturwerte zumindest an einem oberen und einem unteren Punkt, ermittelt werden.

Hierbei stellt es eine sinnvolle Lösung dar, wenn die Entwässerungsvorrichtung wenigstens eine Seitenwand aufweist, in welcher eine Aufnahmevertiefung zur Aufnahme des Leiterbandes vorgesehen ist. Einerseits ist das Leiterband in diesem Fall geschützt und stellt kein Hindernis in der Entwässerungsvorrichtung dar, gegen welches mitgeführter Eintrag stoßen könnte, zum Anderen wird eine mögliche Strömung in der Entwässerungsvorrichtung nicht beeinträchtigt. Zudem ist die Position des Leiterbandes hierdurch definiert und die Installation wird erleichtert.

In konkreter Ausgestaltung kann vorgesehen sein, dass das Leiterband von dem Bereich einer Oberkante der Entwässerungsvorrichtung ausgehend abwärts verläuft. Weiter kann das Leiterband bis in den Bereich einer Rinnensohle oder auch bis in den Bereich einer gegenüberliegenden Oberkante verlegt sein. Entsprechend ist die Auswertung der durch den Mikrocontroller erfassten Messsignale an den Verlauf des Leiterbands anzupassen.

Eine besondere Ausgestaltung sieht vor, dass das Leiterband in einer Entwässerungsvorrichtung eingesetzt wird, in welche ein Filtersubstrat eingebracht ist. Das Filtersubstrat weist eine Oberfläche auf, wobei das Leiterband von dem Bereich der Oberkante bis zu dem Bereich der Oberfläche des Filtersubstrats verläuft. Ein solches Filtersubstrat wird in eine Entwässerungsvorrichtung eingebracht, um das eingetragene Oberflächenwasser direkt vor Ort einer Vorfiltration zuzuführen. Im Bereich der Rinnensohle ist hierbei ein Drainagerohr mit perforierter Oberfläche vorgesehen, in welches das durch das Filtersubstrat gedrungene Wasser einlaufen kann und durch welches es der weiteren Verwendung zugeführt werden kann, notfalls in die Kanalisation abgeführt wird. Auf dem Filtersubstrat kann sich mithin ein Filterkuchen aufbauen, welcher von Zeit zu Zeit abgetragen werden muss. Auch für eine diesbezügliche Überwachung eignet sich die Sensoreinrichtung. Wenn die Auswerteeinheit in einer solchen Installation feststellt, dass die Temperatur eines ersten Temperatursensors deutlich von der Temperatur des zweiten Temperatursensors abweicht, kann dies daran liegen, dass sich um den unteren, zweiten Temperatursensor herum der Filterkuchen so weit aufgebaut hat, dass das umgebende Wasser nicht mehr an ihn heranreicht oder die Prozesse im Filterkuchen die Wassertemperatur dominieren.

Ein weiterer Teil der Erfindung betrifft ein Verfahren zur Auswertung einer Sensoreinrichtung wie vorbeschrieben. Ein solches Verfahren ist erfindungsgemäß dadurch gekennzeichnet, dass der Mikrocontroller Widerstandswerte der Leiterstränge sowie Messwerte der Temperatursensoren ermittelt, sowie vorzugsweise abspeichert, und diese an eine Auswerteeinheit übermittelt und diese in Abhängigkeit von den Widerstandswerten sowie den Messwerten der Temperatursensoren einen Füllstand der Entwässerungsvorrichtung bestimmt.

Im Gesamtprozess nimmt die Auswertung der von dem Mikrocontroller erfassten Daten einen wesentlichen Stellenwert ein. Die Interpretation der Messwerte beginnt bei den bereits beschriebenen Abweichungen der Temperaturwerte, kann aber auch in einer Bewertung von über längere Zeit konstanten Messwerten liegen. Eine solche Bewertung kann sowohl über feste Regeln erfolgen, aber auch unter Einsatz einer, vorzugsweise selbstlernenden, künstlichen Intelligenz erfolgen.

Wesentlich für den erfolgreichen Einsatz ist hierbei auch der Wissensstand bei der Auswertung der vorhandenen und gemessenen Daten. So ist es in allererster Näherung sinnvoll, zu berücksichtigen, in welchen Höhenlagen die einzelnen Kontaktelemente der Leiterstränge angeordnet sind. Dies sollte, gegebenenfalls zusammen mit der Form der Entwässerungseinrichtung und der Ausrichtung des Leiterbandes in der Auswerteeinheit hinterlegt sein.

Darüber hinaus kann vorgesehen sein, dass die Auswerteeinheit mit einem Server oder einer Cloudplattform verbunden ist oder in einen Server oder eine Cloudplattform integriert ist. Dies erlaubt sowohl einen Austausch mit weiteren, benachbarten oder vor- oder nachgeschalteten Systemen, um ein Datennetzwerk mehr oder minder parallel zu einem Leitungsnetzwerk des Oberflächenwassers aufzubauen. Neben den im System gemessenen Daten können hierbei auch weitere Daten, insbesondere von lokalen Wetterstationen oder externen Diensten bereitgestellte Wetter- und Klimadaten, der jeweilige Installationsort der Sensoreinrichtung und ein von einem externen Dienst bereitgestelltes Zeitsignal berücksichtigt werden. Insbesondere kann die Auswerteeinheit hierbei langfristige Messeffekte erfassen und bei der Auswertung berücksichtigen.

In konkreter Ausgestaltung kann eine Verbindung zwischen dem Mikrocontroller und der Auswerteeinheit über eine Funkschnittstelle erfolgen, oder der Austausch erfolgt direkt, wenn die Auswerteeinheit bei dem Mikrocontroller angeordnet ist.

Die vorstehend beschriebene Erfindung wird im Folgenden anhand eines Ausführungsbeispiels näher erläutert.

Es zeigen
- Figur 1: eine Sensoreinrichtung mit einem Leiterband, welches über einen Mikrocontroller mit einem Auswertungsnetzwerk verbunden ist, in schematischer Darstellung,
- Figur 2: die Sensoreinrichtung gemäß Figur 1 mit verkapselten Widerständen in schematischer Darstellung,
- Figur 3: die Sensoreinrichtung gemäß Figur 1, mit einer Vergussmasse eingeschlossen in schematischer Darstellung,
- Figur 4: eine Entwässerungsrinne mit einer erfindungsgemäßen Sensoreinrichtung in perspektivischer Darstellung,
- Figur 5: ein Detail der Figur 4,
- Figur 6: die Entwässerungsrinne gemäß Figur 4 in einer stirnseitigen Draufsicht,
- Figur 7: eine Filtersubstratrinne mit einer erfindungsgemäßen Sensoreinrichtung in perspektivischer Darstellung, sowie
- Figur 8: ein Detail der Figur 7.

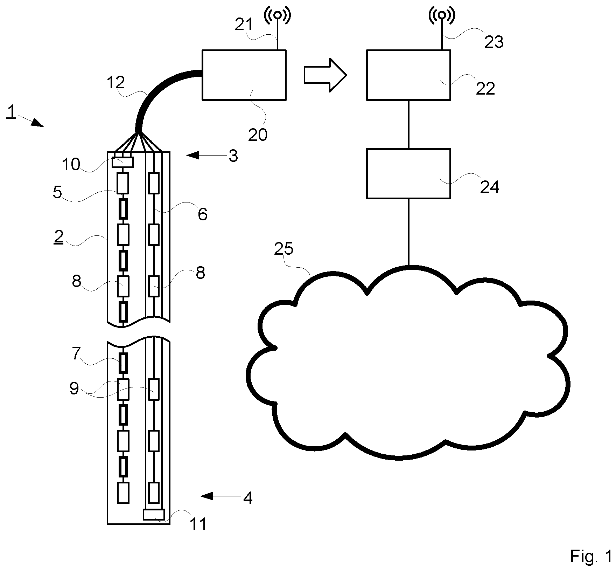

Figur 1 zeigt eine Sensoreinrichtung 1, welche als Füllstandsensor für Produkte und Komponenten im Regenwassermanagement eingesetzt werden kann, wie beispielsweise in Entwässerungsrinnen, Rinnen mit Reinigungssubstrat, Versickerungsrigolen oder Zisternen. Die Sensoreinrichtung 1 besteht aus einem flachen, schmalen und flexiblen Leiterband 2 mit je zwei parallel angeordneten Kontaktelementen 8 und diese Kontaktpaare 9 erstrecken sich wiederholend in geringen Abständen im Millimeterbereich, hier 8 mm, über den gesamten befüllbaren Bereich der jeweiligen, hier nicht gezeigten Entwässerungskomponente. Die parallel angeordneten Kontaktelemente 8 unterscheiden sich dadurch, dass in einen ersten Leiterstrang 5 von oben nach unten jeweils zwischen den Ebenen der Kontaktflächen ein Widerstand 7 in reihenschaltweise eingebracht ist, während in einem zweiten Leiterstrang 6 eine durchgehende Masseverbindung geführt wird.

Die Kontaktelemente 8 sind für den Kontakt mit Flüssigkeiten ausgelegt, beispielsweise vergoldet, hier im speziellen für Regenwasser oder auch belastetes Oberflächenwasser. Das bei einem stärkeren Regenereignis in einer Entwässerungsvorrichtung 26 ansteigende Wasser bewirkt das elektrische Kurzschließen der im Wasser befindlichen Kontaktelemente 8. Dadurch verändert sich der Gesamtwiderstand des Leiterbandes 2, der über einen Kabelstrang 12 am Kopfende 3 des Leiterbandes 2 zu einem Mikrocontroller 20 geführt wird.

Eine weitere Eigenschaft des Leiterbandes 2 sind die ebenfalls integrierten Temperatursensoren 10 und 11 in Form von thermischen Widerständen an verschiedenen Positionen auf dem Leiterband 2, mindestens jedoch an einem Kopfende 3 und einem Tiefpunkt 4 des Leiterbandes 2. Mittels dieser thermischen Widerstände kann der exakte Temperaturwert an der entsprechenden Stelle in der Entwässerungsvorrichtung 26 erfasst werden, beispielsweise im Bereich einer Rinnensohle 30 und im Bereich einer Oberkante 29, wo eine Zarge angeordnet sein kann, um eine Abdeckung der Rinne aufzulegen.

Das flexible Leiterband 2 weist am oberen Ende einen Kabelstrang 12 mit den entsprechenden Datenleitungen auf, mit denen dann zum einen die Widerstandsdekade und damit der Füllstand gemessen werden kann, zum anderen sind dort Adernpaare für die Temperaturmessung durch die Temperatursensoren 10 und 11 auf dem Leiterband 2.

Das Leiterband 2 wird mittels seines Kabelstrangs 12 mit den Mess- und Signalleitungen an den Mikrocontroller 20 angeschlossen, welcher die erforderlichen analogen und digitalen Eingänge für die verschiedenen Widerstandsmessungen aufweist. Der Mikrocontroller fungiert dabei als Datenlogger, der in einem dynamisch anpassbaren Intervall je nach Kontinuität oder bei sich schnell ändernden Ereignissen das Intervall zum Messen und Loggen der Daten vom Sekundenbereich auf einen Minutenbereich anpassen kann. Dabei versieht der Datenlogger die erfassten Messdaten mit einer Kennung und einem Zeitstempel entweder als Echtzeitwert oder als Änderungswert seit der letzten Messung, so dass die später übertragenen Daten auf einer höheren Ebene einer Auswerteeinheit 22 sicher und eindeutig einem echten Zeitstempel zugeordnet werden können.

Der Mikrocontroller 20 dient neben der Funktion als Datenlogger auch zur Datenübertragung. Dazu kann es mit einem Funksender 21 als Übertragungsmodul für eines oder mehrere der gängigen Funkschnittstellen wie LoRaWAN, NBloT, BLE, Bluetooth, ZigBee, Z-Wave, WLAN, Cellular und anderen ausgestattet sein und es überträgt die gesammelten und geloggten Daten mit den Messwerten und Zeitinformationen als Blockübertragung zu definierten Zeitpunkten an die Auswerteeinheit 22, welche die Daten mit einem Funkempfänger 23 empfängt und selbst mit einer höheren Ebene, etwa einem Server 24 oder einer Cloud-Plattform verbunden oder direkt in diese integriert ist.

Die Auswertung der geloggten und erfassten Messdaten erfolgt in der Auswerteeinheit 22. Die hier ausprogrammierte Datenanalyse und -bereinigung ist letztlich ein Bestandteil des Sensors und des Messprinzips und wird durch komplexe Algorithmen und/oder eine selbstlernende Software, gegebenenfalls unter Verwendung künstlicher Intelligenz, ausgeführt. Durch die Langzeitbeobachtung und Erfassung der seitens der Sensoreinrichtung 1 erhobenen Daten kann diese künstliche Intelligenz oder können die Algorithmen unter Zuhilfenahme von weiteren für den Installationsort der Entwässerungsvorrichtung 26 relevanten Umgebungsdaten, wie etwa Niederschlag, Temperatur, Windgeschwindigkeit und -richtung, Sonneneinstrahlung, Luftfeuchtigkeit, Luftdruck und weiteren Daten, die etwa in einer lokalen Wetterstation gemessen werden oder mittels Softwareschnittstellen für die entsprechenden Zeiträume aus der Cloud 25 eingespielten Daten, schleichende Veränderungen und Anomalien erkennen und geeignete Kalibrierungsmaßnahmen durchführen. Auf diese Weise können die Messwerte auch dann zuverlässig ausgewertet werden, wenn sie sich zwar absolut verändert haben, dies aber auf Umstände zurückzuführen sind, welche von der Auswerteeinheit 22 ausgeklammert werden können.

Als Beispiel kann hier genannt werden, dass eine über die Jahre entstandene Sedimentschicht auf den Kontaktflächen erkannt und deren Effekte auf die Messung herausgefiltert werden kann.

Ein weiteres Beispiel ist, dass ein schnelles Abfallen von Füllständen und ein 'Austrocknen' bis in den Sohlenbereich der Entwässerungseinrichtung als solches erkennbar wird, wenn durch die aus weiteren Datenquellen stammenden Umgebungsmesswerte etwa eine hohe Verdunstungsrate, eine hohe Temperatur oder starke Sonneneinstrahlung nahelegen und dies durch die Algorithmen oder eine künstliche Intelligenz erkannt und korrigiert werden kann.

Ein weiteres Beispiel ist der Frostfall, wenn also das Leiterband 2 bei dem Mikrocontroller 20 ungewöhnliche Messergebnisse liefert, die aber auf der höheren Ebene durch Verschneidung mit den integrierten Temperatursensoren und gegebenenfalls Wetterdaten von einer Wetterstation oder durch Wetterdienste auf zugefrorene Kontaktelemente 8 zurückgeführt werden können und die Messwerte daher korrigiert und gegebenenfalls eine Frostmeldung ausgegeben werden können.

Ein weiteres Beispiel stellt es dar, wenn sich im Laufe der Zeit im Bereich einer Rinnensohle 30 eine Sedimentationsschicht oder Schlammschicht festgesetzt hat. Die Algorithmen oder künstliche Intelligenz auf der höheren Ebene der Auswerteeinheit 22 können dieses Verhalten durch ein Monitoring über einen längeren Zeitraum als solches erkennen und mittels der Messunterschiede an einem ersten Temperatursensor 10 an dem oberen Ende des Leiterbandes 2 und einem zweiten Temperatursensor 11 an dem unteren Ende des Leiterbandes 2 etwa auch die Höhe dieser Sedimentationsschicht / Schlammschicht durch die sich über die Zeit verändernden zeitlichen Verhalten der Temperaturverläufe errechnen.

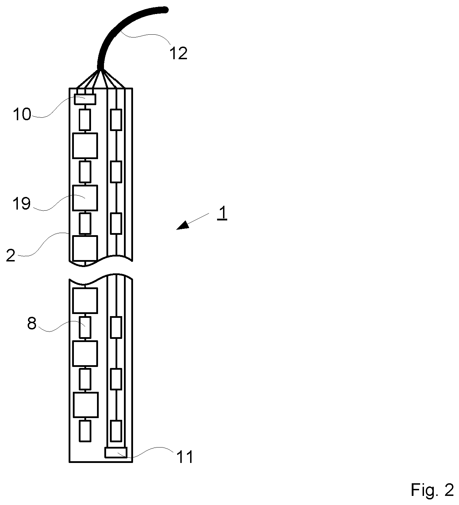

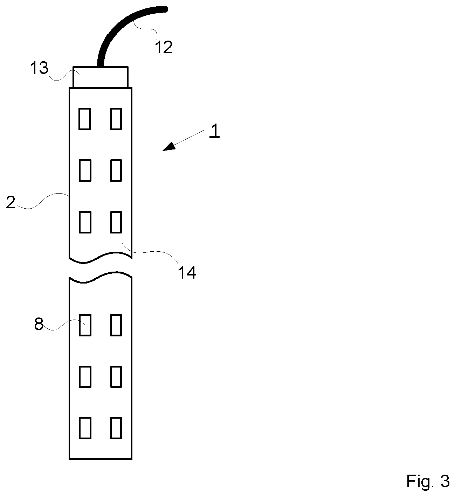

Figur 2 zeigt eine Variante des Leiterbandes 2 mit gekapselten Widerständen 7. Die jeweilige Kapselung 19 schützt die Widerstände 7 und deren Anschlüsse vor Korrosionseffekten aufgrund der anstehenden Wettereinflüsse. Figur 3 hingegen zeigt ein vergossenes Leiterband 2. Abgesehen von den Kontaktelementen 8 ist das restliche Leiterband 2 einschließlich seiner Leiterstränge 5 und 6 und den Widerständen 7 sowie der Temperatursensoren 10 und 11 vor Umwelteinflüssen durch eine umschließende, flexible Behausung aus einem Silikonmaterial oder Kunststoff geschützt. Auch der Kabelstrang 12 im oberen Bereich wird in einem fest vergossenen Kabelansatz 13 integriert.

Diese Schutzeinfassung in Form einer Gussmasse 14 aus flexiblem Material ist zum Einen resistent gegenüber den im Wasser zu erwartenden gelösten oder nicht gelösten Stoffen wie Salzen, Schwermetallen, Petrolen, und dergleichen mehr bis hin zu Partikeln wie Sand oder Mikroplastik, zum Anderen ist sie jedoch auch so konzipiert, dass sich an der Oberfläche und speziell im Bereich der Kontaktelemente kaum Ablagerungen bilden können, da diese durch die Flexibilität der Gussmasse 14 und der leichten temperaturbedingten Ausdehnung immer wieder abgestoßen werden.

Das Leiterband 2 besteht aus einem flexiblen Material und auch die aufgebrachten elektronischen Komponenten wie Widerstände 7 und Kontaktelemente 8 sind so klein ausgeführt, dass sich das gesamte Leiterband 2 einfach auch in kurvige Profile nahtlos integrieren lässt. Die Gussmasse aus Silikon, welche das Leiterband 2 schützt, weist ebenfalls eine Beweglichkeit und Flexibilität auf, so dass die Sensoreinrichtung 1 in gebogene Entwässerungsvorrichtungen 26 oder andere Bauformen problemlos integriert werden kann.

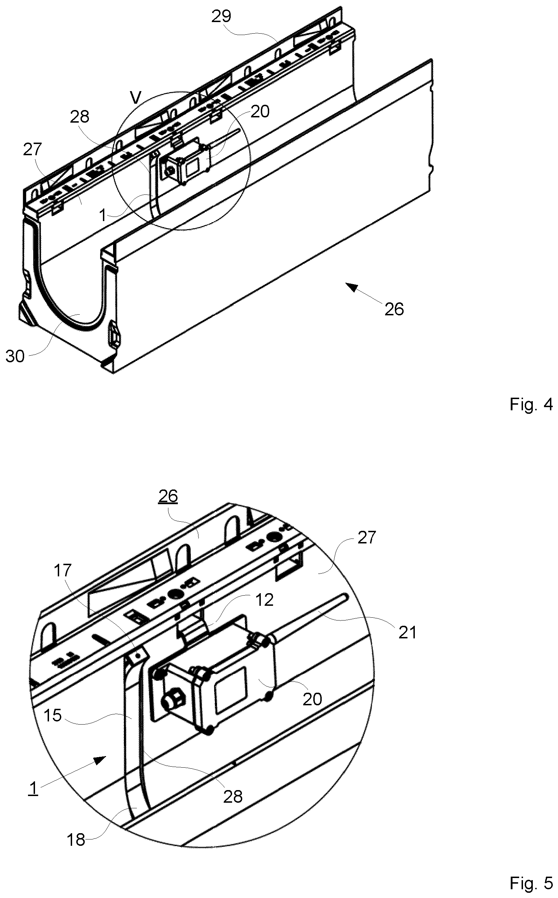

Figur 4 zeigt eine solche Sensoreinrichtung 1 in einem Einbauzustand in einer Entwässerungsvorrichtung 26 in Form einer Entwässerungsrinne. Hier erweist sich als Vorteil, dass bei gleichen Abständen der verschiedenen Ebenen der Kontaktelemente 8 diese etwa beim Einbau in der Entwässerungsvorrichtung 26 zwar im Bereich einer Oberkante 29 recht gerade und vertikal eingebaut ist und damit die Messauflösung durch die maximalen Abstände gegeben ist, aber im unteren Bereich der Rinne durch die Biegung zum Sohlenboden hin die vertikalen Abstände immer geringer werden. Dies ermöglicht der auswertenden Software als Algorithmus oder künstliche Intelligenz auf der höheren Ebene der Auswerteeinheit 22, wie etwa einem Server 24 oder einer Cloud-Plattform, bei Kenntnis der Bauform der Entwässerungsvorrichtung 26, den messtechnisch interessanten Bereich im Bereich der Rinnensohle 30 mit einer höheren Auflösung erfassen zu können.

In der Entwässerungsvorrichtung 26 ist vorliegend in einer Seitenwand 27 eine Aufnahmevertiefung 28 eingearbeitet, in welcher die Sensoreinrichtung 1 eingelegt, eingeklebt oder je nach Bauform der Umhüllung 15 auch eingeclipst wird. Wie in dem Detail der Figur 5 zu erkennen ist, steht die Sensoreinrichtung 1 sowohl im Bereich der Oberkante 29, knapp unterhalb einer hier vorgesehenen Zarge, aus der Aufnahmevertiefung 28 hervor, so dass eine Belüftungsöffnung 17 freibleibt. Dadurch, dass die Sensoreinrichtung 1 nochmals in einer Umhüllung 15 aufgenommen ist, muss das anstehende Wasser in eine hier nicht sichtbare Eintrittsöffnung 16 eingetragen werden, kann in der Umhüllung 15 aufsteigen und die in der Umhüllung 15 enthaltene Luft durch die Belüftungsöffnung 17 verdrängen.

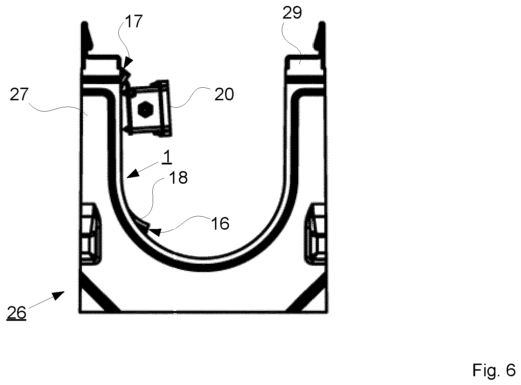

Der Figur 6 kann die untere Ausbiegung 18 entnommen werden, welche dafür sorgt, das die Eintrittsöffnung 16 als Zugang für das anstehende Wasser zugänglich ist. Durch das oberseitige Ausbiegen ist auch die Belüftungsöffnung 17 frei und das Wasser kann unproblematisch in der Sensoreinrichtung 1 aufsteigen oder abfallen.

Zurück zur Figur 5 ist unmittelbar neben der Umhüllung 15 der Sensoreinrichtung 1 der ebenfalls zu dieser gehörige Mikrocontroller 20 angeordnet, welcher über einen Funksender 21 verfügt, hier erkennbar an seiner Funkantenne. Die Verbindung mit dem Leiterband 2 erfolgt über den Kabelstrang 12, dessen Anschluss an dem Leiterband 2 aufgrund der länger ausgeführten Umhüllung 15 nicht zu sehen ist.

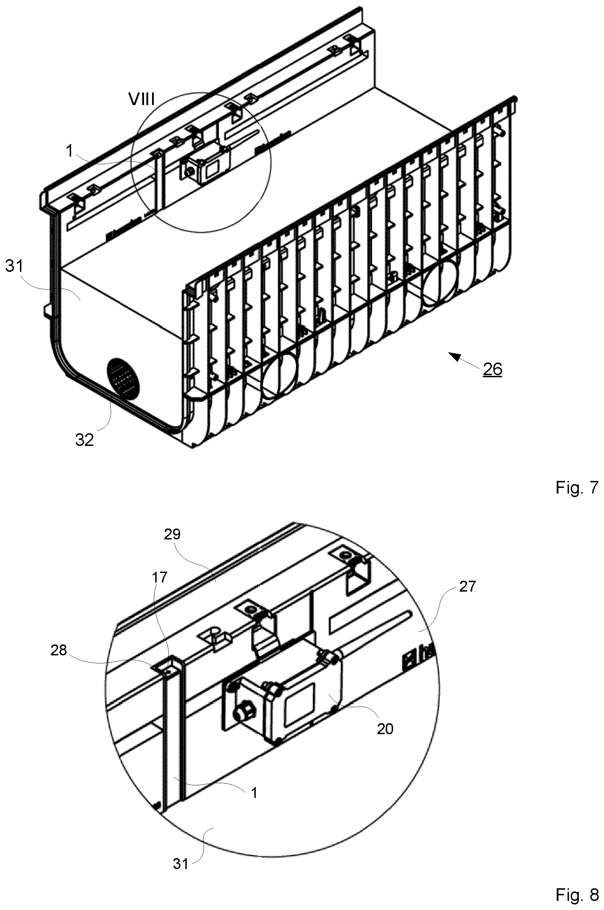

Figur 7 zeigt eine weitere Ausgestaltung der Entwässerungsvorrichtung 26 als Filtersubstratrinne. In dieser Filtersubstratrinne ist ein Filtersubstrat 31 angeschüttet, welches ein in der Rinnensohle liegendes Drainagerohr 32 umgibt. In die Entwässerungsvorrichtung 26 einlaufendes Oberflächenwasser wird hierdurch zunächst durch das Filtersubstrat 31 gefiltert, bevor es in das Drainagerohr 32 eintreten und in die Kanalisation abgeführt werden kann. Allerdings kann sich in einer solchen Anordnung ein Filterkuchen aufbauen, welcher auch in Höhe der Sensoreinrichtung vorliegen kann. Diese reicht im vorliegenden Fall wiederum von einer Oberkante 29 nur bis zur Oberfläche des Filtersubstrats 31. Wie im Detail der Figur 8 gezeigt, kann aufgrund der Bauform hier auf eine Ausbiegung 18 verzichtet werden. So ist es hier möglich, auch eine starre, gerade Leiterplatte als Leiterband 2 zu verwenden und auf die Flexibilität des Leiterbandes 2 zu verzichten.

Vorstehend beschrieben ist somit eine Sensoreinrichtung, wie auch ein Verfahren zur Auswertung einer solchen Sensoreinrichtung, bei welcher eine Messung neben der reinen Füllstandsmessung auch mit zusätzlichen Mitteln zuverlässig verifiziert werden kann.

### BEZUGSZEICHENLISTE

- 1: Sensoreinrichtung
- 2: Leiterband
- 3: Kopfende
- 4: Tiefpunkt
- 5: erster Leiterstrang
- 6: zweiter Leiterstrang
- 7: Widerstand
- 8: Kontaktelement
- 9: Kontaktpaar
- 10: erster Temperatursensor
- 11: zweiter Temperatursensor
- 12: Kabelstrang
- 13: Kabelansatz
- 14: Gussmasse
- 15: Umhüllung
- 16: Eintrittsöffnung
- 17: Belüftungsöffnung
- 18: Ausbiegung
- 19: Kapselung
- 20: Mikrocontroller
- 21: Funksender
- 22: Auswerteeinheit
- 23: Funkempfänger
- 24: Server
- 25: Cloud
- 26: Entwässerungsvorrichtung
- 27: Seitenwand
- 28: Aufnahmevertiefung
- 29: Oberkante
- 30: Rinnensohle
- 31: Filtersubstrat
- 32: Drainagerohr

## Patentansprüche

1. Sensoreinrichtung umfassend ein Leiterband (2) mit wenigstens zwei in einer Längsrichtung verlaufenden und elektrisch voneinander isolierten Leitersträngen (5, 6), welche jeweils in Längsrichtung des Leiterbandes (2) eine Vielzahl beabstandeter Kontaktelemente (8) aufweisen, wobei jeweils ein Kontaktelement (8) eines ersten Leiterstrangs (5) mit einem Kontaktelement (8) eines zweiten Leiterstrangs (6) ein Kontaktpaar (9) bilden und zwischen benachbarten Kontaktpaaren (9) jeweils ein Widerstand (7) in zumindest einem der Leiterstränge (5, 6) angeordnet ist, **dadurch gekennzeichnet, dass** dem Leiterband (2) wenigstens zwei Temperatursensoren (10, 11) zugeordnet sind, wobei ein erster Temperatursensor (10) im Bereich eines Kopfendes (3) des Leiterbandes (2) und ein zweiter Temperatursensor (11) im Bereich eines Tiefpunkts (4) des Leiterbandes (2) angeordnet sind und die Leiterstränge (5, 6) und die Temperatursensoren (10, 11) mit einem Mikrocontroller (20) zur Auswertung elektrischer Eigenschaften der Leiterstränge (5, 6) und der Temperatursensoren (10, 11) elektrisch verbunden sind.

2. Sensoreinrichtung gemäß Anspruch 1, **dadurch gekennzeichnet, dass** die wenigstens zwei Temperatursensoren (10, 11) als thermische Widerstände oder als Thermoelement ausgeführt sind.

3. Sensoreinrichtung gemäß einem der Ansprüche 1 oder 2, **dadurch gekennzeichnet, dass** das Leiterband (2) aus einem flexiblen Material, vorzugsweise aus Polyethylenterephthalat oder Polyimid, hergestellt ist.

4. Sensoreinrichtung gemäß einem der vorhergehenden Ansprüche, **dadurch gekennzeichnet, dass** die Kontaktelemente (8) eines Kontaktpaares (9) in Längsrichtung des Leiterbandes (2) in gleichem Abstand zum Kopfende (3) und damit bei einem senkrechten Verlauf des Leiterbandes (2) auf gleicher geodätischer Höhe angeordnet sind.

5. Sensoreinrichtung gemäß einem der vorhergehenden Ansprüche, **dadurch gekennzeichnet, dass** der erste Leiterstrang (5) die zwischen den Kontaktpaaren (9) angeordneten Widerstände (7) in einer Reihenschaltung aufweist und der zweite Leiterstrang (6) ein durchgehender Massestrang ist.

6. Sensoreinrichtung gemäß einem der vorhergehenden Ansprüche, **dadurch gekennzeichnet, dass** das Leiterband (2) in einer starren oder einer flexiblen Gussmasse (14) vergossen oder mit einer wasserfesten Schutzlackierung versehen ist.

7. Sensoreinrichtung gemäß einem der Ansprüche 1 bis 5, **dadurch gekennzeichnet, dass** die Widerstände (7) des Leiterbandes (2) flüssigkeitsdicht gekapselt sind.

8. Sensoreinrichtung gemäß einem der vorhergehenden Ansprüche, **dadurch gekennzeichnet, dass** dem Leiterband (2) ein flüssigkeitsdichter Kabelansatz (13) zugeordnet ist.

9. Sensoreinrichtung gemäß einem der vorhergehenden Ansprüche, **dadurch gekennzeichnet, dass** dem Leiterband (2) eine Umhüllung (15) zugeordnet ist, welche wenigstens eine Eintrittsöffnung (16) im Bereich des Tiefpunkts (4) des Leiterbandes (2) und wenigstens eine Belüftungsöffnung (17) im Bereich des Kopfendes (3) des Leiterbandes (2) aufweist.

10. Sensoreinrichtung gemäß Anspruch 9, **dadurch gekennzeichnet, dass** die Umhüllung (15) aus einem flexiblen Material, vorzugsweise aus Silikon oder Kunststoff, insbesondere einem thermoplastischen Kunststoff, hergestellt ist.

11. Sensoreinrichtung gemäß einem der vorhergehenden Ansprüche, **dadurch gekennzeichnet, dass** das Leiterband (2) mit einer unterirdischen Entwässerungsvorrichtung (26), etwa einer Rinne, einer Zisterne, einer Rigole oder einem Schacht verbunden ist und sich zumindest näherungsweise senkrecht von dem Kopfende (3) im Bereich einer Oberkante ausgehend in Richtung einer Rinnensohle (30) erstreckt.

12. Sensoreinrichtung gemäß Anspruch 11**, dadurch gekennzeichnet, dass** die Entwässerungsvorrichtung wenigstens eine Seitenwand (27) aufweist, in welcher eine Aufnahmevertiefung (28) zur Aufnahme des Leiterbandes (2) vorgesehen ist.

13. Sensoreinrichtung gemäß einem der Ansprüche 11 oder 12, **dadurch gekennzeichnet, dass** das Leiterband (2) von dem Bereich einer Oberkante (29) der Entwässerungsvorrichtung (26) ausgehend abwärts verläuft.

14. Sensoreinrichtung gemäß einem der Ansprüche 11 bis 13, **dadurch gekennzeichnet, dass** das Leiterband (2) bis in den Bereich einer Rinnensohle (30) verläuft.

15. Sensoreinrichtung gemäß einem der Ansprüche 11 bis 14, **dadurch gekennzeichnet, dass** das Leiterband (2) bis in den Bereich einer gegenüberliegenden Oberkante (29) verläuft.

16. Sensoreinrichtung gemäß einem der Ansprüche 11 bis 13, **dadurch gekennzeichnet, dass** in die Entwässerungseinrichtung (26) ein Filtersubstrat (31) eingebracht ist, welches eine Oberfläche aufweist, wobei das Leiterband (2) von dem Bereich einer Oberkante (29) bis zu dem Bereich der Oberfläche des Filtersubstrats (31) verläuft.

17. Verfahren zur Auswertung einer Sensoreinrichtung (1) gemäß einem der vorhergehenden Ansprüche 11-16, **dadurch gekennzeichnet, dass** der Mikrocontroller (20) Widerstandswerte der Leiterstränge (5, 6) sowie Messwerte der Temperatursensoren (10, 11) ermittelt, sowie vorzugsweise abspeichert, und diese an eine Auswerteeinheit (22) übermittelt und diese in Abhängigkeit von den Widerstandswerten sowie den Messwerten der Temperatursensoren (10, 11) einen Füllstand der Entwässerungsvorrichtung (26) bestimmt.

18. Verfahren gemäß Anspruch 17, **dadurch gekennzeichnet, dass** die Höhenlagen der einzelnen Kontaktelemente (8) der Leiterstränge (5, 6) in der Auswerteeinheit (22) hinterlegt sind.

19. Verfahren gemäß einem der Ansprüche 17 oder 18, **dadurch gekennzeichnet, dass** eine Auswertung in der Auswerteeinheit (22) mittels einer, vorzugsweise selbstlernenden, künstlichen Intelligenz erfolgt.

20. Verfahren gemäß einem der Ansprüche 17 bis 19, **dadurch gekennzeichnet, dass** eine Verbindung zwischen dem Mikrocontroller (20) und der Auswerteeinheit (22) über eine Funkschnittstelle (21, 23) erfolgt.

21. Verfahren gemäß einem der Ansprüche 17 bis 19, **dadurch gekennzeichnet, dass** die Auswerteeinheit (22) bei dem Mikrocontroller (20) angeordnet ist.

22. Verfahren gemäß einem der Ansprüche 17 bis 21, **dadurch gekennzeichnet, dass** die Auswerteeinheit (22) mit einem Server (24) oder einer Cloudplattform verbunden ist oder in einen Server (24) oder eine Cloudplattform integriert ist.

23. Verfahren gemäß einem der Ansprüche 17 bis 22, **dadurch gekennzeichnet, dass** die Auswerteeinheit (22) von lokalen Wetterstationen oder externen Diensten bereitgestellte Wetter- und Klimadaten, einen Installationsort der Sensoreinrichtung und ein von einem externen Dienst bereitgestelltes Zeitsignal berücksichtigt.

24. Verfahren gemäß einem der Ansprüche 17 bis 23, **dadurch gekennzeichnet, dass** die Auswerteeinheit (22) langfristige Messeffekte erfasst und bei der Auswertung berücksichtigt.

## Claims

1. Sensor device comprising a conductor strip (2) with at least two conductor strands (5, 6) running in a longitudinal direction and electrically insulated from one another, each of which has a plurality of spaced-apart contact elements (8) in the longitudinal direction of the conductor strip (2), wherein each contact element (8) of a first conductor strand (5) forming a contact pair (9) with a contact element (8) of a second conductor strand (6), and a resistor (7) being arranged in at least one of the conductor strands (5, 6) between adjacent contact pairs (9),
**characterised in that** at least two temperature sensors (10, 11) are assigned to the conductor strip (2), wherein a first temperature sensor (10) is arranged in the region of a head end (3) of the conductor strip (2) and a second temperature sensor (11) is arranged in the region of a low point (4) of the conductor strip (2), and the conductor strands (5, 6) and the temperature sensors (10, 11) are electrically connected to a microcontroller (20) for evaluating electrical properties of the conductor strands (5, 6) and the temperature sensors (10, 11).

2. Sensor device according to claim 1, **characterised in that** the at least two temperature sensors (10, 11) are designed as thermal resistors or as thermocouples.

3. Sensor device according to one of claims 1 or 2, **characterised in that** the conductor strip (2) is made of a flexible material, preferably polyethylene terephthalate or polyimide.

4. Sensor device according to one of the preceding claims, **characterised in that** the contact elements (8) of a contact pair (9) are arranged in the longitudinal direction of the conductor strip (2) at equal distances from the head end (3) and thus, when the conductor strip (2) is vertical, at the same geodetic height.

5. Sensor device according to one of the preceding claims, **characterised in that** the first conductor strand (5) has the resistors (7) arranged between the contact pairs (9) in a series connection and the second conductor strand (6) is a continuous ground strand.

6. Sensor device according to one of the preceding claims, **characterised in that** the conductor strip (2) is encapsulated in a rigid or flexible casting compound (14) or provided with a waterproof protective coating.

7. Sensor device according to one of claims 1 to 5, **characterised in that** the resistors (7) of the conductor strip (2) are encapsulated in a liquid-tight manner.

8. Sensor device according to one of the preceding claims, **characterised in that** the conductor strip (2) is assigned a liquid-tight cable attachment (13).

9. Sensor device according to one of the preceding claims, **characterised in that** the conductor strip (2) is assigned a sheath (15) which has at least one entry opening (16) in the area of the lowest point (4) of the conductor strip (2) and at least one ventilation opening (17) in the area of the head end (3) of the conductor strip (2).

10. Sensor device according to claim 9, **characterised in that** the sheath (15) is made of a flexible material, preferably silicone or plastic, in particular a thermoplastic.

11. Sensor device according to one of the preceding claims, **characterised in that** the conductor strip (2) is connected to an underground drainage device (26), such as a gutter, a cistern, a trench or a shaft, and extends at least approximately vertically from the head end (3) in the area of an upper edge towards a gutter base (30).

12. Sensor device according to claim 11, **characterised in that** the drainage device has at least one side wall (27) in which a recess (28) is provided to accommodate the conductor strip (2).

13. Sensor device according to one of claims 11 or 12, **characterised in that** the conductor strip (2) extends downwards from the area of an upper edge (29) of the drainage device (26).

14. Sensor device according to one of claims 11 to 13, **characterised in that** the conductor strip (2) extends into the area of a channel base (30).

15. Sensor device according to one of claims 11 to 14, **characterised in that** the conductor strip (2) extends to the area of an opposite upper edge (29).

16. Sensor device according to one of claims 11 to 13, **characterised in that** a filter substrate (31) is inserted into the drainage device (26), which has a surface, wherein the conductor strip (2) extends from the area of an upper edge (29) to the area of the surface of the filter substrate (31).

17. Method for evaluating a sensor device (1) according to one of the preceding claims 11-16,
**characterised in that** the microcontroller (20) determines resistance values of the conductor strands (5, 6) and measured values of the temperature sensors (10, 11), preferably stores them, transmits them to an evaluation unit (22) and determines a fill level of the drainage device (26) in the evaluation unit (22) as a function of the resistance values and the measured values of the temperature sensors (10, 11).

18. Method according to claim 17, **characterised in that** the heights of the individual contact elements (8) of the conductor strands (5, 6) are stored in the evaluation unit (22).

19. Method according to one of claims 17 or 18, **characterised in that** an evaluation is performed in the evaluation unit (22) by means of an artificial intelligence, preferably a self-learning one.

20. Method according to one of claims 17 to 19, **characterised in that** a connection between the microcontroller (20) and the evaluation unit (22) is established via a radio interface (21, 23).

21. Method according to one of claims 17 to 19, **characterised in that** the evaluation unit (22) is located at the microcontroller (20).

22. Method according to one of claims 17 to 21, **characterised in that** the evaluation unit (22) is connected to a server (24) or a cloud platform or is integrated into a server (24) or a cloud platform.

23. Method according to one of claims 17 to 22, **characterised in that** the evaluation unit (22) takes into account weather and climate data provided by local weather stations or external services, an installation location of the sensor device and a time signal provided by an external service.

24. Method according to one of claims 17 to 23, **characterised in that** the evaluation unit (22) records long-term measurement effects and takes them into account in the evaluation.

## Revendications

1. Dispositif capteur comprenant une bande conductrice (2) avec au moins deux brins conducteurs (5, 6) s'étendant dans le sens longitudinal et isolés électriquement l'un de l'autre, qui présentent chacun dans le sens longitudinal de la bande conductrice (2) une multitude d'éléments de contact (8) espacés, un élément de contact (8) d'un premier brin conducteur (5) formant une paire de contacts (9) avec un élément de contact (8) d'un deuxième brin conducteur (6) et une résistance (7) étant disposée entre des paires de contacts voisines (9) dans au moins l'un des brins conducteurs (5, 6),
**caractérisé en ce qu'**au moins deux capteurs de température (10, 11) sont associés à la bande conductrice (2), un premier capteur de température (10) étant disposé dans la zone d'une extrémité de tête (3) de la bande conductrice (2) et un deuxième capteur de température (11) étant disposé dans la zone d'un point bas (4) de la bande conductrice (2), et les brins conducteurs (5, 6) et les capteurs de température (10, 11) sont reliés électriquement à un microcontrôleur (20) pour évaluer les propriétés électriques des brins conducteurs (5, 6) et des capteurs de température (10, 11).

2. Dispositif de détection selon la revendication 1, **caractérisé en ce que** les au moins deux capteurs de température (10, 11) sont réalisés sous forme de résistances thermiques ou de thermocouples.

3. Dispositif de détection selon l'une des revendications 1 ou 2, **caractérisé en ce que** la bande conductrice (2) est fabriquée dans un matériau flexible, de préférence en polyéthylène téréphtalate ou en polyimide.

4. Dispositif capteur selon l'une des revendications précédentes, **caractérisé en ce que** les éléments de contact (8) d'une paire de contacts (9) sont disposés dans le sens longitudinal de la bande conductrice (2) à égale distance de l'extrémité de tête (3) et donc, lorsque la bande conductrice (2) est disposée verticalement, à la même hauteur géodésique.

5. Dispositif capteur selon l'une des revendications précédentes, **caractérisé en ce que** le premier brin conducteur (5) comporte les résistances (7) disposées entre les paires de contacts (9) dans un montage en série et le deuxième brin conducteur (6) est un brin de masse continu.

6. Dispositif capteur selon l'une des revendications précédentes, **caractérisé en ce que** la bande conductrice (2) est moulée dans une masse de coulée rigide ou flexible (14) ou recouverte d'un vernis de protection imperméable.

7. Dispositif capteur selon l'une des revendications 1 à 5, **caractérisé en ce que** les résistances (7) de la bande conductrice (2) sont encapsulées de manière étanche aux liquides.

8. Dispositif capteur selon l'une des revendications précédentes, **caractérisé en ce qu'**un embout de câble étanche aux liquides (13) est associé à la bande conductrice (2).

9. Dispositif capteur selon l'une des revendications précédentes, **caractérisé en ce qu'**une enveloppe (15) est associée à la bande conductrice (2), laquelle présente au moins une ouverture d'entrée (16) dans la zone du point bas (4) de la bande conductrice (2) et au moins une ouverture d'aération (17) dans la zone de l'extrémité supérieure (3) de la bande conductrice (2).

10. Dispositif capteur selon la revendication 9, **caractérisé en ce que** l'enveloppe (15) est fabriquée dans un matériau flexible, de préférence en silicone ou en plastique, en particulier en plastique thermoplastique.

11. Dispositif capteur selon l'une des revendications précédentes, **caractérisé en ce que** la bande conductrice (2) est reliée à un dispositif de drainage souterrain (26), par exemple une rigole, une citerne, une tranchée ou un puits, et s'étend au moins approximativement perpendiculairement à partir de l'extrémité supérieure (3) dans la zone d'un bord supérieur en direction d'un fond de rigole (30).

12. Dispositif capteur selon la revendication 11, **caractérisé en ce que** le dispositif de drainage comporte au moins une paroi latérale (27) dans laquelle est prévu un renfoncement (28) destiné à recevoir la bande conductrice (2).

13. Dispositif capteur selon l'une des revendications 11 ou 12, **caractérisé en ce que** la bande conductrice (2) s'étend vers le bas à partir de la zone d'un bord supérieur (29) du dispositif de drainage (26).

14. Dispositif capteur selon l'une des revendications 11 à 13, **caractérisé en ce que** la bande conductrice (2) s'étend jusqu'à la zone d'un fond de gouttière (30).

15. Dispositif capteur selon l'une des revendications 11 à 14, **caractérisé en ce que** la bande conductrice (2) s'étend jusqu'à la zone d'un bord supérieur opposé (29).

16. Dispositif capteur selon l'une des revendications 11 à 13, **caractérisé en ce qu'**un substrat filtrant (31) présentant une surface est introduit dans le dispositif de drainage (26), la bande conductrice (2) s'étendant depuis la zone d'un bord supérieur (29) jusqu'à la zone de la surface du substrat filtrant (31).

17. Procédé d'évaluation d'un dispositif capteur (1) selon l'une des revendications 11 à 16 précédentes,
**caractérisé en ce que** le microcontrôleur (20) détermine les valeurs de résistance des brins conducteurs (5, 6) ainsi que les valeurs mesurées par les capteurs de température (10, 11), les enregistre de préférence, les transmet à une unité d'évaluation (22) et détermine, en fonction des valeurs de résistance et des valeurs mesurées par les capteurs de température (10, 11).

18. Procédé selon la revendication 17, **caractérisé en ce que** les hauteurs des différents éléments de contact (8) des brins conducteurs (5, 6) sont enregistrées dans l'unité d'évaluation (22).

19. Procédé selon l'une des revendications 17 ou 18, **caractérisé en ce qu'**une évaluation est effectuée dans l'unité d'évaluation (22) au moyen d'une intelligence artificielle, de préférence auto-apprenante.

20. Procédé selon l'une des revendications 17 à 19, **caractérisé en ce qu'**une connexion entre le microcontrôleur (20) et l'unité d'évaluation (22) s'effectue via une interface radio (21, 23).

21. Procédé selon l'une des revendications 17 à 19, **caractérisé en ce que** l'unité d'évaluation (22) est disposée au niveau du microcontrôleur (20).

22. Procédé selon l'une des revendications 17 à 21, **caractérisé en ce que** l'unité d'évaluation (22) est connectée à un serveur (24) ou à une plateforme cloud ou est intégrée dans un serveur (24) ou une plateforme cloud.

23. Procédé selon l'une des revendications 17 à 22, **caractérisé en ce que** l'unité d'évaluation (22) prend en compte les données météorologiques et climatiques fournies par des stations météorologiques locales ou des services externes, un emplacement d'installation du dispositif capteur et un signal horaire fourni par un service externe.

24. Procédé selon l'une des revendications 17 à 23, **caractérisé en ce que** l'unité d'évaluation (22) enregistre les effets de mesure à long terme et les prend en compte lors de l'évaluation.
